# EUROPEAN PATENT APPLICATION

(11) **EP 1 292 160 A1**
(43) Date of publication of application: **12.03.2003**
(21) Application number: 01850152.8
(22) Date of filing: 07.09.2001
(51) Int. Cl.: H04Q 7/32, G06F 17/60, H04L 29/06

(54) **Method for adapting mobile terminals to different protocols and mobile terminal**

(71) Applicant: TELEFONAKTIEBOLAGET LM ERICSSON, 126 25 Stockholm (SE)
(72) Inventor: Kiessling, Johan, 113 43 Stockholm (SE); Dellmark, Jan, 184 60 Aekersberga (SE); Arwald, Jan, 192 53 Sollentuna (SE)
(74) Representative: Dahnér, Christer

(57) **Abstract**

A method for adapting mobile terminals in wireless communication systems to the variety of different protocols used when interacting with a multitude of different service providers. By using a set of building blocks, so called "primitives" stored in the terminal instead of having a set of protocols stored, a script is downloaded from a service provider with instructions how the primitives should be arranged to form the desired protocol. The service provider secures his identity with a digital signature to ensure a correct operation. Preferably, the script is executed in one atomic operation. Preferably, the script forms a protocol adapted for money transactions.

## Description

### TECHNICAL FIELD OF THE INVENTION

The present invention relates to a method for, and to a mobile terminal for, adapting mobile transceiving terminals in a wireless communication system to a variety of different protocols in a secure manner.

### DESCRIPTION OF RELATED ART

In the emerging mobile electronic commerce, there is a need for implementing secure protocols for payments, tickets or other sensitive data. Today, a vast number of different protocols are used for similar applications. They have emerged from different industries as well as from different geographical areas.

Since the market for e-commerce still is so immature, it is likely to create a variety of new protocols over time. To cope with such an amount of protocols different solutions could be imagined and has also been proposed.

Until now, state of the art technique has proposed several alternatives to handle the large amount of different protocols. One solution has been to build in a subset of protocols in each mobile phone. This is not very successful since the numbers of protocols are too large to be implemented. Memory space in not an endless resource, especially not in mobile handsets when compared to PCs, and by this technique a lot of valuable memory will be used for services never wanted by the customer and also certain services that might be wanted has never been implemented. Also new protocols defined after the production of the mobile terminal can not be introduced.

Yet another problem is to deal with limited validity period of a protocol in a terminal. It also requires each service provider to evaluate and agree upon each step in production of the terminal to ensure the security of the implementation in each product.

Another solution would be to create an open area for application download. Unfortunately, the security may then be compromised due to viruses, false applications etc. downloaded to the mobile terminal. In the PC world of today, this is a very well known problem.

Yet another solution would be to build in protocols in an external device which could be used by the mobile terminal to download from. The obvious disadvantage with this method would be that your mobile terminal (commonly a mobile phone) will no longer be the center of mobile e-commerce. It would also require the user to carry around several gadgets and limit the number of users since not all mobile users are likely to have the extra device needed. The marginal costs would also be higher then compared to if it were implemented in an existing product like the mobile phone. An example of a product connected with this technique would be the "wireless wallet".

Still another technique that could be convenient would be to define a common mobile electronic transaction protocol. This seems hard to realize since that would require all industries using mobile transactions to agree on one single protocol. It would still not solve the problem with dynamic upgrades as a new version of the protocol is introduced. This would also require changes in existing infrastructure to accept the new protocol.

Therefore it would be desirable to be able to dynamically update the support for different protocols in individual terminals whilst preserving the high degree of security needed for electronic transactions.

### SUMMARY

It is an object of the present invention to overcome the above mentioned problems and provide a method for adapting mobile terminals to different protocols in a wireless communication system overcoming all the above mentioned problems.

Another object of the present invention is to arrange for a transaction with full security and for which the user feels comfortable and safe when using.

According to one aspect of the present invention there is provided a method that enables a dynamical updating for different protocols as claimed in claim 1.

Instead of storing an excessive number of protocols in your mobile terminal, the idea underlying this invention is to store a number of primitives that, when put together, could form a script language in the terminal. The primitives could be characterized as the "building blocks" of the script language, i.e. the smallest identifiable units. The script language should then be used to form "scripts" that are able to describe a number of different protocols. A script could therefore be said to describe a selection of primitives following each other in a certain order to form a protocol.

These protocols should not be understood as restricted to mobile electronic transaction protocols even though such protocols will be used as example under the detailed descriptions.

The basic idea however, on which the invention relies, is that the primitives (building blocks) forming the protocols will have a longer lifetime themselves than the protocols they form. Protocols of today come and go, but their smallest units are often the same, arranged together in different orders. By securing the implementation of the primitives, different protocols can be utilized and thereby making the production of terminals less dependent of the service provisioning.

The script is preferably defined by a content or a service provider (such as VISA, AMEX or the local Certification Authority), which ensures that the script is to be trusted and that the protocol is valid.

To arrange for a transaction with full security the script is signed by a digital signature to ensure that no changes are made from the original definition of the protocol. The signature will then be verified and the script executed in the terminal in a way that guarantees that the script is executed in one atomic operation by the calling application with the exact flow intended by the signer of the script.

A transaction method according to the invention thereby entails a number of advantages, e.g;

When you need to update a protocol you just have to update which primitives to use and in which order they should follow each other.

The primitives used are more stable over time than the more complex protocols built on top of them.

Implementations according to the invention allows dynamic download of complex protocols with full security and also automatically indicates to the user who is the issuer and are to be trusted.

The specific implementation in a given terminal can be hidden. If for example the protocol requires encryption based on minimum 64 bits, this can be implemented as for example SSL or WTLS in the transport layer. This would be transparent to the calling application as long as the encryption is supported by the terminal with at least the requested quality. Therefore neither the user, nor the service provider have to bother about hardware and software implementations in each terminal product to be used. Implementation dependencies irrelevant to the security are hidden in the primitives.

The primitives can be used to build any secure protocol, i.e. not limited to payments or tickets, as long as they can be described by a sequence of primitives.

### BRIEF DESCRIPTION OF THE DRAWINGS

The features of the invention believed to be novel are set forth with particularity in the appended claims. The invention itself however, both as to organization and method of operation, together with further objects and advantages thereof, may be best understood by reference to the following description with the accompanying drawings, in the several Figures in which:
- Fig. 1 shows a block diagram depicting the basic structure and
- Fig. 2 shows a block diagram depicting a flow chart describing a preferred embodiment of the invention.

### DETAILED DESCRIPTION OF EMBODIMENTS

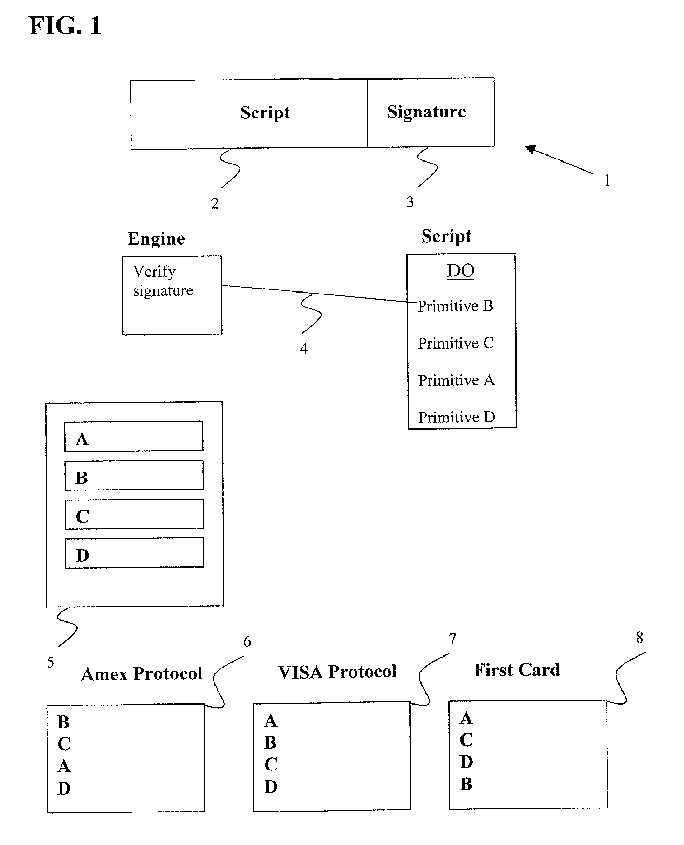

In a preferred embodiment of the invention illustrated in Fig. 1 a set of primitives should be preloaded in a mobile terminal (e.g. mobile phone, smart phone or any computerized product with transceiving capability). These primitives could be simple commands that when put together form a script language.

Examples of such primitives are "Sign text", "Verify signature" or "Store copy protected". The primitives could also be mathematical algorithms or different transactions towards a safe storage area on the phone, e.g. the SIM-card. Also primitives such as "If...Then", "While ... Do" are needed for flow control. By giving the primitives "labels", true identification standardization of the different primitives are ensured.

The script language is able to give a description for the primitives, in which order they should follow and how they should interconnect. It could also state the minimum quality required by each operation, (e.g. the key length needed for the encryption, whether personal keys/certificates need to come from smart cards or if a simple certificate in the RAM is enough)

The script language is then able to describe a number of different protocols. Such protocols could assist a user to perform a variety of services, e.g. mobile electronic transactions. Some scripts could be preloaded in the telephone, but the main advantage is evidently that a dynamical downloading of the script could take place when a user wants to start a certain application/transaction. The calling application will then just have to download the script needed for performing its task.

The script, which is defined by a company that acts as the service provider, should be signed with a digital signature to ensure that no changes are made from the original definition of the protocol.

This could e.g. be implemented so that a digital signature production part produces the digital signature using a secret key of the service provider which normally enciphers the data using an asymmetrical encipherment algorithm operating under both the secret and a public key. The digital signature is then added to the transmitting data of the script and is then transmitted to the mobile terminal. It can be deciphered using a complementary public key.

In that way the signature would be verified by the user and the script executed in the terminal as one atomic operation by the calling application. This ensures that the signer of the script, i.e. the company that acts as a service provider for the application, executes the script with the exact flow as intended. Hence it is very important that the script is not interrupted and that the user knows he is in contact with the service provider so there are no intermediate forgers.

The verification could be used as a criterion for displaying a security icon on the terminal. In that manner the user will be sure that a secure and correct operation is now available. The icon could e.g. be linked to the trademark of the company issuing/guaranteeing/signing the protocol, e.g. VISA or any other content provider. The user is thereby informed that he is using a secure service and at the same time gets the verification of the content/payment provider. In this way no additional steps are needed from the user to get this verification. It also protects the service provider from false implementations.

Turning now to Fig. 1, the process is illustrated with an exemplary digital packet 1, containing information both about the script 2 and the digital signature 3. This is just one example of a packet which could be downloaded to the mobile terminal from a service provider and the general concept of the invention is not to be restricted to any forms and kinds of digital packets.

The downloaded script 2 could be described as a recipe for creating a protocol out of primitives A-D. One of the primitives 4 could e.g. be the command "Verify signature". The engine running the script on the terminal could be certified to a certain capability of level and trust using code verification or other security mechanisms. Box 5 illustrates a secure storage for the primitives in the mobile terminal where access is only allowed after correct verification of the digital signature. By saying that the primitives should be stored in the mobile terminal, it is also implied that this could mean that they are stored on the SIM-card. Having them stored in the mobile terminal, (e.g. in a memory or on the SIM-card) is advantageous, but even having them stored in an external unit could be imaginable.

Box 6-8 represents three different protocols from three different imaginary service providers, where we see that the content of each protocol could differ in that the order of the primitives in each protocol differ.

Each primitive can be implemented in a variety of ways but the application can request a certain quality of service. For example that the certificate is stored on a smart card, that memory is copy protected, that the keyboard is tamper proof etc. Hence, the service quality requirements is decided by the application and secured by the digital signature. Each primitive and service quality level can be registered to indicate to an application on a higher level what options are available in a specific terminal at any given time.

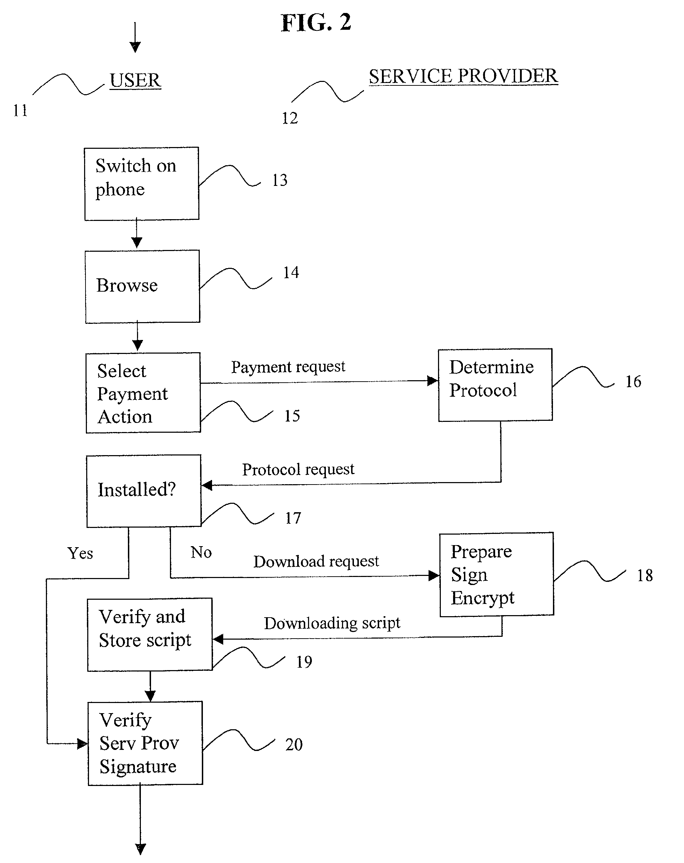

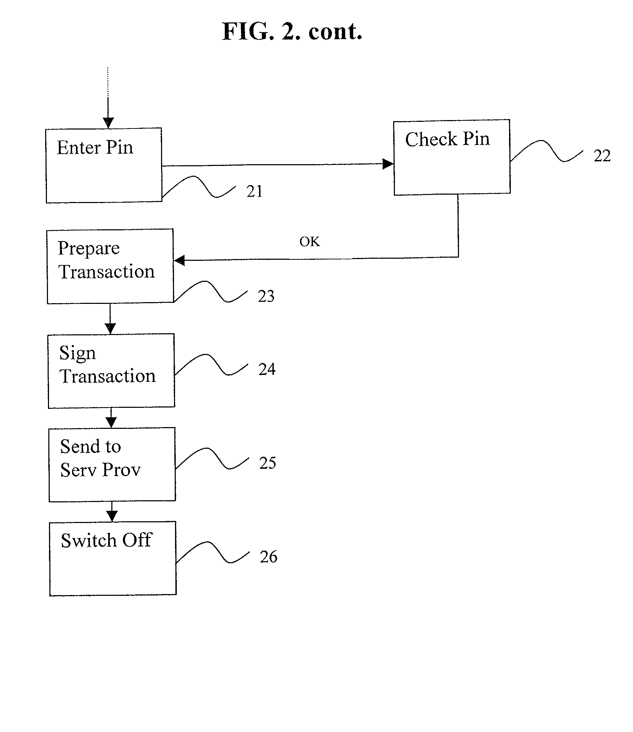

A real case scenario example is presented in fig. 2;

A user 11 wants to perform a money transaction from one of his accounts to another. A mobile terminal 13 is used to connect to a server, e.g. via a WAP-browser 14. The server is under control of the service provider 12 (e.g. VISA). He selects the desired payment action 15 (here e.g. "transfer between own accounts") and sends a payment request to the service provider. The service provider determines what payment protocol is appropriate 16 and asks whether the protocol needed is already downloaded 17. The application checks if you already have the selected protocol,
i.e. if you are already a VISA customer. If not, the user can request a download of the protocol, whereby the service provider prepares the script, signs it and encrypts it with a private key 18. The script is then downloaded and the mobile terminal verifies and stores it 19.

The script is now ready for execution and that could start with a verification of the service provider signature 20 by using a public key according to any known technique. If verification is positive, the application could be set to display an icon, e.g. the Visa logo on the screen, to inform the user that it is a safe connection.

It could e.g. also be checked here that the primitives used are primitives known by the mobile terminal so that the script is valid with reference to what the mobile terminal is prepared for.

The script could then e.g. include controlling of a PIN code 21,22 connected the user and, when considered ok by the service provider, allows the user to prepare the transaction 23. The user enters into his mobile terminal the transaction data (amount, account number etc.).

The transaction is signed 24 by the user using a private key and is sent 25 encrypted to the service provider. The transaction is now completed and the Visa-icon could be switched off 26.

This flowchart is merely imaginary exactly in what order commands are given and the stepwise procedures are executed. Variations in said flowchart lie within the scope of the invention and are only a simple software implementation design matter.

During the procedure and invisible to the user of the mobile terminal, the description of the protocol, the script, is downloaded. As mentioned above, the mobile terminal checks the digital signature according to any known technique by e.g. downloading a certificate or having a key already stored.

## Claims

1. Method for adapting mobile terminals to different protocols in a wireless communication system **characterized in that** it enables a dynamical updating or downloading of different protocols by;
- defining a script language made of primitives, the script language being able to describe a variety of protocols, said primitives being stored in the mobile terminal
- downloading a script from a service provider into a mobile terminal, said script defining the order in which the primitives are to be executed, thus forming a protocol,
- executing said script in said mobile terminal.

2. Method for adapting mobile terminals to different protocols in a wireless communication system according to claim 1, cha racterized in that the service provider signs the script with a digital signature before the downloading into the mobile terminal.

3. Method for adapting mobile terminals to different protocols in a wireless communication system according to claim 2, cha racterized in that the execution of the script starts with a verification of said service provider signature.

4. Method for adapting mobile terminals to different protocols in a wireless communication system according to claim 2 or 3, **characterized in that** the service provider signs the script using a private key and that the user verifies said signature using a public key.

5. Method for adapting mobile terminals to different protocols in a wireless communication system according to any of claims 2 to 4,
**characterized in that** a correct verification is used as a criteria for displaying a security icon on the display of the mobile terminal.

6. Method for adapting mobile terminals to different protocols in a wireless communication system according to any of claims 1 to 5, **characterized in that** the script is executed in one atomic operation by the calling application.

7. Method for adapting mobile terminals to different protocols in a wireless communication system according to any of claims 2 to 6, **characterized in that** the calling application can request a certain quality of service level which will be secured by the digital signature.

8. Method for adapting mobile terminals to different protocols in a wireless communication system according to any of claims 1 to 7, **characterized in that** the downloaded script forms a protocol adapted for money transactions.

9. A mobile terminal used in a wireless communication system adapted to different protocols **characterized in that** it enables a dynamical updating or downloading of different protocols by storing a set of primitives, said primitives defining a script language being able to describe a variety of protocols and comprising;
- means for downloading a script from a service provider, said script defining the order in which the primitives are to be executed, thus forming a protocol and
- means for executing said script.
